# EUROPEAN PATENT SPECIFICATION

(11) **EP 1 035 963 B1**
(45) Date of publication and mention of the grant of the patent: **19.03.2003**
(21) Application number: 98957316.7
(22) Date of filing: 05.10.1998
(51) Int. Cl.: B29C 70/38

(54) **FEED CONTROL SYSTEM FOR FIBER PLACEMENT MACHINES**
ZUFÜHRSTEUERUNGSSYSTEM FÜR FASERAUFLEGEVORRICHTUNGEN
SYSTEME DE COMMANDE D'ALIMENTATION POUR MACHINES DE PLACEMENT DE FIBRES

(30) Priority: 05.11.1997 US 964486
(43) Date of publication of application: 20.09.2000
(73) Proprietor: Sikorsky Aircraft Corporation, Stratford, CT 06615-9129 (US)
(72) Inventor: KAY, Bruce, F., Milford, CT 06460 (US)
(74) Representative: Klunker . Schmitt-Nilson . Hirsch
(86) International application number: US9821026
(87) International publication number: WO99022932

(56) References cited:
- DE-A- 3 226 290
- US-A- 4 699 683
- US-A- 4 943 338

## Description

### Technical Field

This invention relates to automated manufacture of composite articles, and, more particularly, to a feed control system for a fiber placement machine to produce lightweight, structurally efficient composite articles.

### Background Of The Invention

The use of fiber reinforced resin impregnated composites has grown substantially in recent years. Structures fabricated from composite materials offer a variety of advantages over corresponding structures formed from metallic materials. Such advantages include, inter alia, a high strength to weight ratio, excellent corrosion resistance, improved impact resistance, enhanced flaw or damage tolerance (i.e., resistance to crack propagation), and low dielectric properties.

Despite the advantageous weight, strength and material properties of advanced composites, the widespread use thereof has been impeded by the high cost of associated fabrication methods. Blending the desired structural characteristics with a low cost manufacturing process. i.e., one which reduces labor intensive process steps yet maintains laminate quality, has been an ongoing and continuous challenge for designers of composite structures.

Primary structural characteristics to be considered by the designer include: the selection of fiber reinforcement, i.e., materials having the requisite mechanical properties, resin binder, fiber matrix orientation, fiber continuity, alleviation of stress concentrations, and reduction of thermally induced stresses. To maximize the benefits of composites it is essential that the fiber orientation be optimally tailored to meet the strength and stiffness requirements for a particular application. That is, composites can be tailored to be anisotropic (capable of carrying load in a particular direction) rather than isotropic (equal strength in all directions); hence, orienting the fibers in the direction of the load will optimally result in the most weight efficient structure. Similarly, by varying the use of available matrix reinforcement materials (e.g., graphite, fiberglass, aramid fibers, etc.), the designer is able to control such parameters as static and fatigue strength, stiffness. and toughness.

These considerations are weighed and balanced against the cost and complexity of a particular fabrication technique. Typically, the manufacturing approach should: produce the optimum fiber orientation while maximizing material utilization, minimize cutting operations, minimize the probability of operator/laminator error, be repeatable, accommodate fiber bulk variations, maintain uniform fiber volume, and provide uniform laminate quality (via uniform compaction).

The most conventional composite manufacturing method includes the lay-up of discrete plies or laminates of pre-impregnated composite fabric, which are hand-stacked, laminate by laminate, over a mold surface. Generally, a Mylar template or other lay-up aid is used to identify and locate each ply of composite material. Intermediate steps which may be required include periodic de-bulking of the composite lay-up to ensure proper compaction and laminate quality during the final cure operation. Once completed, an impervious membrane such as a nylon or silicon bag is placed over the composite lay-up, sealed to the underlying mold, and evacuated so as to cause atmospheric pressure to act on and compact the composite laminate. Furthermore, the entire vacuum-bagged mold assembly is placed in an autoclave which provides an elevated temperature and pressure environment to fully cure/compact the composite lay-up.

Advantages to this manufacturing technique include minimal investment of capital equipment. the ability to selectively build-up material in particular regions, and uniform laminate quality. Disadvantages include high labor costs due to the laborious hand lay-up process, an increased probability of operator error (e.g., the laminator may inadvertently omit a ply in a multi-ply laminate), and non-optimum material utilization. Regarding the latter, such "prepreg" composite material is available in a limited variety of fiber orientations and sheet thickness. Generally, the available fiber orientations are 0/±45/90, and standard sheet thickness are either 0.013 cm (0.005 in) for unidirectional plies (all fibers oriented in the same direction), or 0.02 cm (0.0075 in) for woven fabric (e.g., 0/90 degrees). As such, if the strength requirements of a particular structure, e.g., an aircraft skin structure, necessitate more or less fibers than are provided via an integer number of sheets, the designer is forced to utilize a full sheet to produce the requisite strength. Consequently, weight penalties are incurred which. in applications such as fixed- and rotary-wing aircraft, will adversely affect the fuel and flight performance of the aircraft.

In an effort to overcome many of the shortcomings discussed above, various automated manufacturing methods have been developed including filament winding and fiber placement machines. Filament winding machines employ a wet winding technique wherein fibers of filamentary material are drawn through a resin bath mounted on a traversing carriage having a pay-out eye. A form or tool, carried on a rotating mounting structure, is located with respect to the carriage such that the resin impregnated fibers are guided under tension by the pay-out eye longitudinally along the rotating tool. The pay-out eye traverses the tool from end-to-end laying down successive layers of fibers until the desired wall thickness of composite material is wound on the tool. Using conventional pressure or vacuum bagging techniques, the resin or matrix material is cured on the tool which is subsequently removed to form the cured composite article. See, for example, U.S. Pat. Nos. 3,378,427, 3,146,926 and 3,363,849.

Advantages to a filament winding approach include part-to-part repeatability, and greater versatility to produce the desired fiber orientation and wall thickness of the composite article. Limitations of filament winding include the inability to fabricate composite articles having a complex curvature and to vary wall thickness from one region to another. Regarding the former, filament winding is best suited for fabricating composite articles having relatively simple shapes wherein all surface contours are either linear or convex in shape. e.g., a cylinder. As such, the fibers, which are applied to the surface under tension, can be properly compacted during cure operations. In contrast, fibers wound over a concave surface will tend to "bridge" the surface from peak to peak, thereby resulting in a segment which is essentially unsupported and cannot be properly compacted against the mold surface. Regarding the latter, filament winding is best suited for fabricating composite articles having a generally constant wall thickness. That is, filament winding machines continuously pay-out fibers over a mold surface and, as such, can readily produce a constant wall thickness. Inasmuch as filament winding machines cannot terminate and initiate fiber placement without manual intervention, filament winding cannot readily produce composite articles which require varying wall thickness from one area to another.

The limitations of filament winding, have, in many ways, been solved by fiber placement machines of the type disclosed in U.S. Patents 5,110,395,5223,072 and 5,454,897. Machines of this type lay a plurality of preimpregnated composite tows, i.e., bundles of preimpregnated composite fibers, in a juxtaposed array on a mold surface. More specifically, the fiber placement machine manipulates a fiber placement head relative to a mold or form about multiple axes. Unlike filament winding machines, the fiber placement head feeds, presses and compacts the tows directly onto the mold surface by a compaction roller or shoe. The mechanisms which control the head are effective to maintain the roller or shoe perpendicular to the surface of the mold such that the composite tows are pressed against non-planar surfaces of the tool. Furthermore, the fiber placement head is adapted to initiate and terminate the pay-out of composite tows at the beginning and end of each pass along the mold surface. A controller commands the movement of the fiber placement head to make multiple passes along the surface to produce continuous layers of composite fibers and/or cover large areas of the mold.

In addition to the advantages associated with filament winding, fiber placement machines can lay composite tows over concave surfaces and provide greater flexibility with respect to control of wall thickness from one area of a composite article to another. With respect to the latter, the ability to stop and start the pay-out of composite tows permits the fiber placement head to shift position from one area to another thereby laying material in a specific area to vary thickness and structural reinforcement. One disadvantage to fiber placement machines relates to non-optimum material utilization caused by the standard or stock size of composite tows. This problem is similar to one described above with respect to the use of standard thickness plies in a conventional prepreg lay-up. Generally, each composite tow is supplied in the form of a flat tape and has a thickness of about 0.0254 cm (0.010 in). As such, if the strength requirements of a particular structure necessitate more or less fibers than are provided via an integer number of rolled passes, the designer is forced to utilize a full thickness of tows, i.e., program the fiber placement machine to pay-out another layer, to produce the requisite strength. As such, weight penalties are incurred by utilizing more material, i.e., fiber reinforcement. than is necessary to react the subject loads.

US-A-4,699,683 discloses the features of the preambles of independent claims 1 and 6.

### Summary of the Invention

It is an object of the present invention to provide a feed control system for a fiber placement machine which feed control system controls the aerial density of composite tows to produce lightweight, structurally efficient composite articles.

This and other objects are achieved by a feed control system in accordance with claim 1 and a fiber placement machine in accordance with claim 6. Preferred embodiments are defined in the dependent claims 2 to 5 and 7 to 12 respectively. The feed control system and the fiber placement machine, respectively, are capable of controlling the aerial density of composite tows being laid to ameliorate the structural efficiency of the composite article.

### Brief Description Of The Drawings

A more complete understanding of the present invention and the attendant features and advantages thereof may be had by reference to the following detailed description of the invention when considered in conjunction with the following drawings wherein:
Fig. 1 is a perspective view of a fiber placement machine including a fiber placement head for laying tows of preimpregnated composite fiber on a mold surface;
Fig. 2 is an internal view of the fiber placement head for depicting various internal components thereof including a feed control system according to the present invention for controlling the delivery of tows to a compaction device;
Fig. 3 schematically depicts the operation of the fiber placement machine including a supply of composite tows, a compaction device for compacting the composite tows against a mold surface, and the feed control system of the present invention;
Fig. 4 is a detailed isometric view of an exemplary feed control system according
Fig. 5a depicts a broken away perspective view of a compaction roller wherein the feed control system delivers a pattern of continuous, juxtaposed composite tows to the compaction roller; and
Fig. 5b depicts a broken away perspective view of a compaction roller wherein the feed control system delivers a spaced-apart pattern of composite tows to the compaction roller.

### Best Mode For Carrying Out The Invention

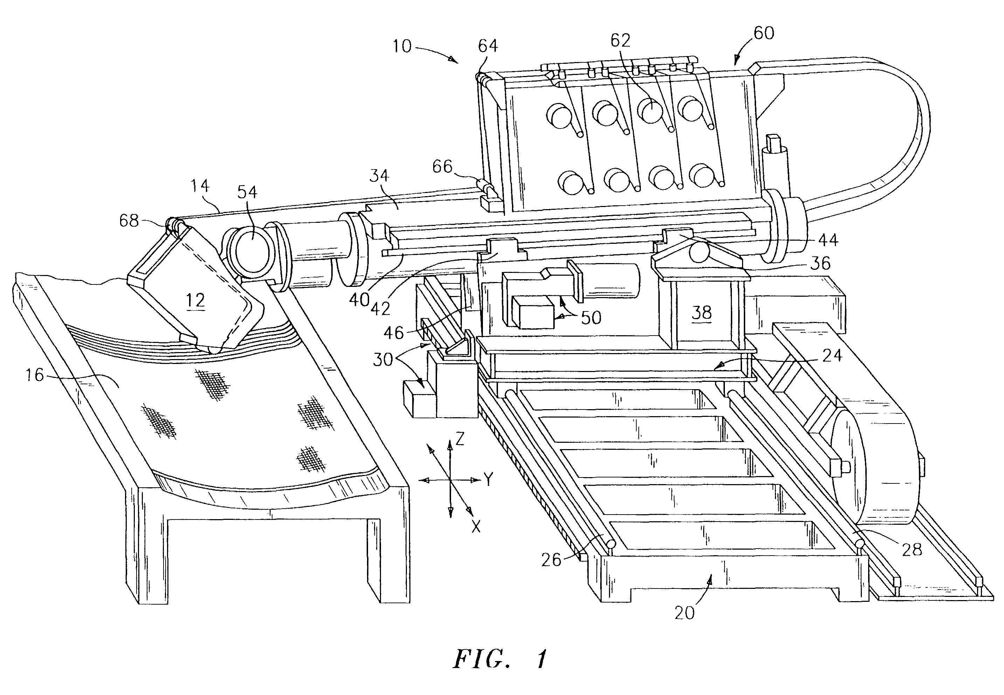

Referring now to the drawings wherein like reference characters identify corresponding or similar elements throughout the several views, Fig. 1 depicts a perspective view of a fiber placement machine 10 which supports and manipulates a fiber placement head 12 operative to lay composite tows 14 over a mold surface 16. As used herein. the term "tow" refers to a strand of composite material consisting of a bundle of fibers preferably impregnated with a binder or matrix material such as epoxy. The fiber placement machine 10 includes a base support 20 for mounting a carriage 24 capable of traversing longitudinally along guide rails 26, 28 of the base support 20, i.e., along the X-axis of the reference coordinate system. The carriage 24 is driven by a conventional motor-controlled rack and pinion system 30.

A cross slide 34 is pivotally mounted on opposite sides to a pair of bearings 36 each carried atop a vertical column 38 of the carriage 24, one of each is shown in FIG. 1. Furthermore. the cross slide 34 includes a pair of guide rails 40. one of which is shown in Fig. 1, for engaging forward and aft bearing blocks, 42 and 44, respectively. A rack and pinion drive system (not shown) effects linear translation of the cross-slide along the Y-axis of the reference coordinate system. In addition, the cross slide 34 includes a pair of support plates 46 which define an arcuate rack (occluded by portions of the carriage 24) for engaging a pinion drive system 50. The pinion drive system 50 in combination with the arcuate rack effects rotation of the cross slide about the bearing 36 so as to effect pivotal movement of the cross-slide 34 in a substantially vertical direction, i.e., along the Z-axis of the coordinate system.

To one end of the cross slide 34 is mounted a robotic wrist 54 which carries the fiber placement head 12. This robotic wrist 54 is commercially available and is effective to move the fiber placement head 12 along a number of axes. Such motion provided by the robotic wrist 54 is in addition to the movement of cross slide 34 along the X-axis with carriage 24, the linear translation of cross slide 34 along the Y-axis, and the substantially vertical movement of the cross slide 34 along the Z-axis, described above. The fiber placement machine 10 is, therefore, capable of manipulating the position of the fiber placement head 12 along a number of axes with respect to the mold surface 16. Such motions are coordinated by a controller (not shown) which is discussed in detail in Brockman et al. U.S. Patent 5,223,072.

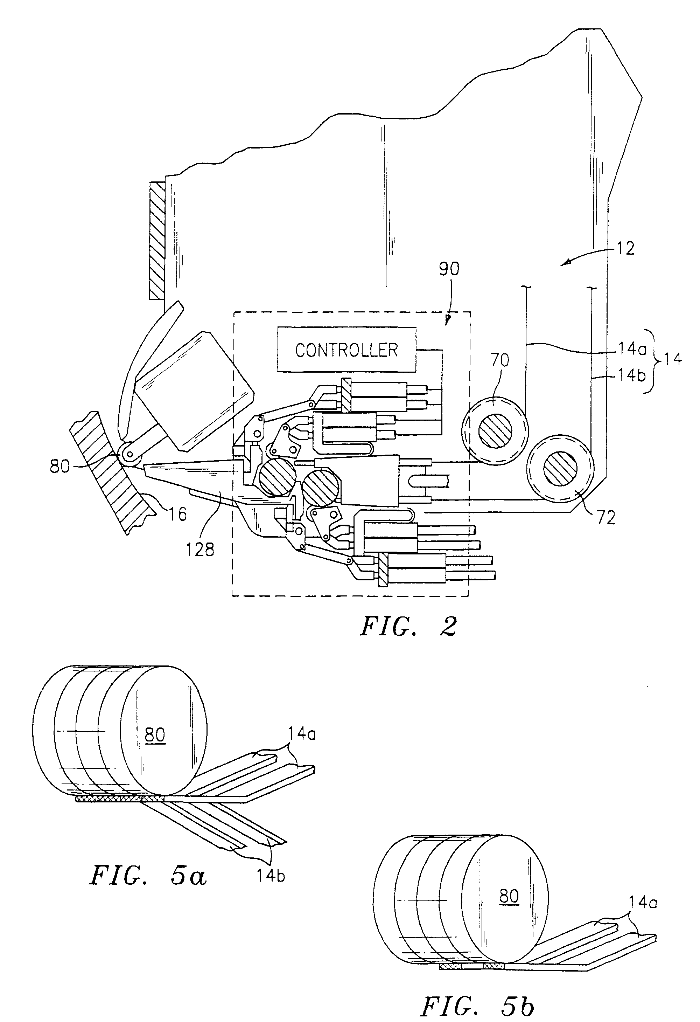

Referring now to Figs. 1 and 2, the illustrated embodiment of the fiber placement machine 10 is effective to supply a plurality of individual composite tows 14 to the fiber placement head 12 for application onto the mold surface 16. The composite tows 14 are supplied by a creel assembly 60 carried on the cross slide 34 which includes a first plurality of spools 62 on one side and second plurality of spools (not shown) on the opposite side. each of which supplies a single composite tow 14. The composite tows 14 are drawn from the spools 62 over a fixed roller 64, a first redirect roller 66 mounted to the creel assembly 60, and a second redirect roller 68 disposed in combination with the fiber placement head 12. Functionally, the redirect rollers 66, 68 maintain the spatial position of the composite tows 14 as they are drawn from the creel assembly 60 to the fiber placement head 12.

A first plurality of composite tows 14a (Fig. 2), i.e., typically one-half of the total number of composite tows 14, are directed from the redirect roller 68 to an upper idler roller 70 rotatably mounted to the base of fiber placement head 12, and the other plurality of composite tows 14b are directed from redirect roller 68 to a lower idler roller 72 mounted beneath the upper idler roller 70. All of the aforementioned rollers 64, 66, 68, 70, 72 include individual roller segments or disks for each composite tow 14 such that each tow 14 may be fed at independent rates from the creel assembly 60. The composite tows 14 are guided from the upper and lower idler rollers 70, 72 to a compaction roller 80 via a feed control system 90 according to the present invention. The compaction roller 80 is operative to press each composite tow 14 onto the mold surface 16 and, via manipulation of the fiber placement head 12, is capable of laying the tows 14 over surfaces having a complex curvature including concave surfaces. The compaction roller 80 comprises multiple discs, one for each composite tow, each being capable of independent rotation and being biased against the mold surface 16. These features facilitate a need to vary the pay-out rates of the composite tows 14 while furthermore ensuring uniform compaction pressure as the roller moves across changing contours of the mold surface 16. A compaction roller of this type is more fully described in Vaniglia U.S. Patent 5,454.897.

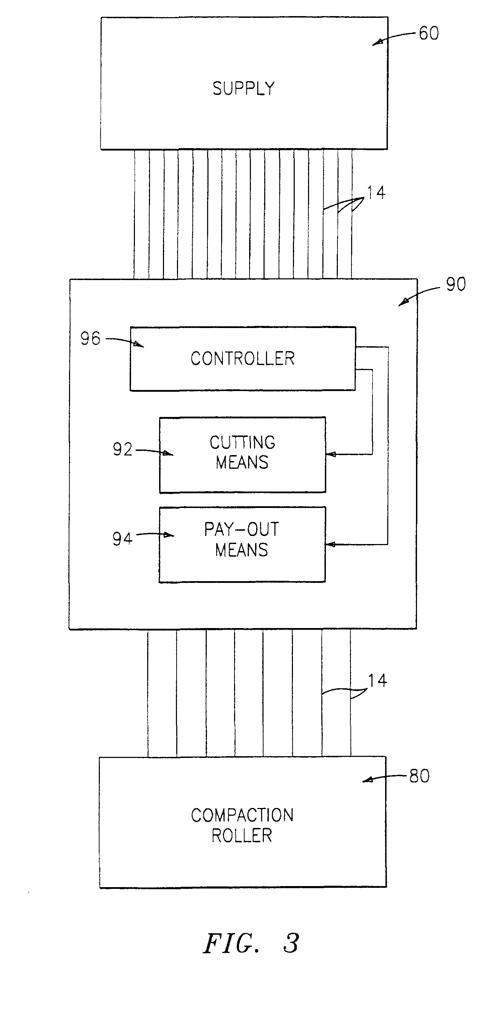

In Fig. 3, the feed control system 90 of the present invention is operative to control the pay-out of composite tows 14 including, inter alia, the initiation and termination of a pay-out sequence, and selectively drop-off composite tows 14 to define a two-dimensional pattern, e.g.. a triangular shaped ply. In addition to these conventional features, the feed control system 90 is operative to selectively reduce the aerial density of composite tows 14 laid by the fiber placement machine 10, thereby optimizing the utilization of composite tows 14. In the context used herein "aerial density" means the density of composite fibers being laid over a given area during a single pass of the fiber placement head 12. A "reduction" in aerial density refers to a reduction in composite fibers as compared to a pattern of contiguous, juxtaposed composite tows conventionally laid by fiber placement machines of the prior art.

More specifically, the feed control system 90 is adapted to receive a supply of composite tows 14 from the creel assembly 60 and deliver a spaced-apart pattern of composite tows 14 to the compaction roller 80. In the preferred embodiment, the feed control system 90 comprises a cutting means 92 for cutting individual composite tows 14, a pay-out means 94 for feeding or delivering composite tows 14 to the compaction roller 80, and a controller 96 for issuing a command signals to the cutting and pay-out means 92, 94 to initiate and/or terminate a spaced-apart pattern of composite tows 14. In general, the feed control system 90 will selectively cut and clamp composite tows 14 or, alternatively, pay-out composite tows 14 in an alternating pattern to reduce the number of tows 14 being delivered to the compaction roller 80. For example, if the supply of composite tows 14 comprises sixteen (16) individual tows, the feed control system 90 may cut and clamp every other composite tow to deliver a pattern of eight (8) laterally spaced-apart composite tows. Based on the typical or standard size of such composite tows 14, the spacing between tows will be about 0.476 cm (0.1875 inches) when compacted against the mold surface. Alternatively, it may be desirable to cut and clamp pairs of composite tows 14 while feeding adjacent pairs of composite tows 14 to produce a pattern of four (4) pairs of spaced-apart composite tows. By selectively cutting, or stated conversely, delivering composite tows 14 in a laterally spaced-apart pattern, the aerial density of composite tows 14 laid by the compaction roller 80 is reduced. As such, the feed control system 90 is capable of laying an amount of fiber reinforcement which more accurately meets the structural design requirements of a composite article. Consequently, the composite article fabricated by the feed control system 90 of the present invention is structurally efficient, and, hence, lighter in weight.

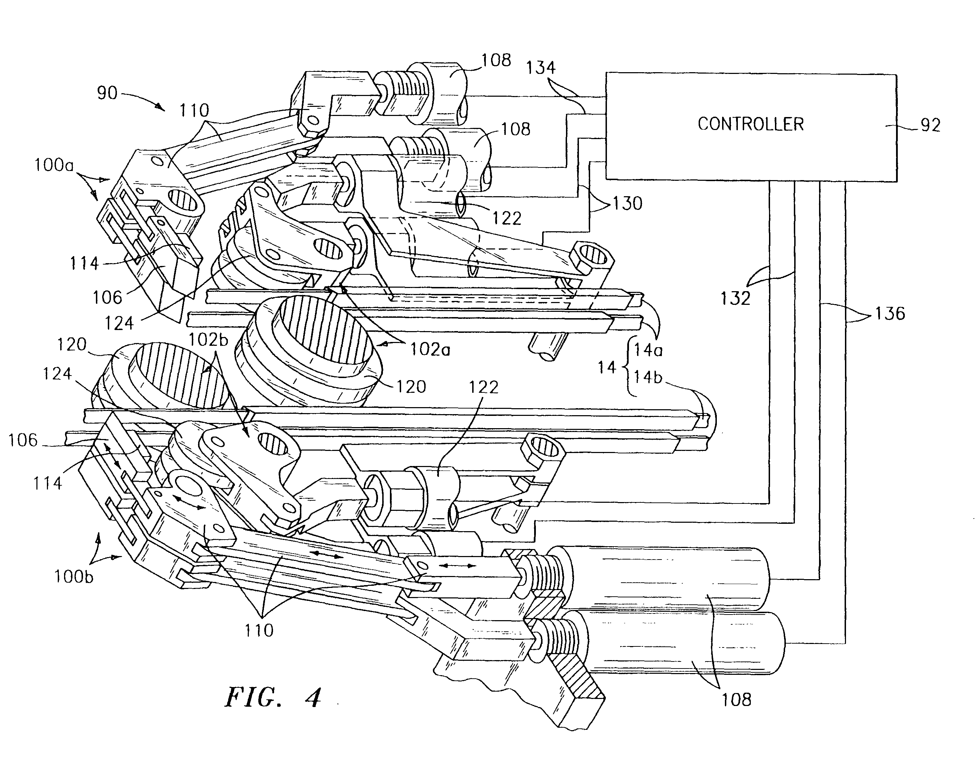

An exemplary embodiment of the feed control system 90 is shown in Fig. 4 wherein, to facilitate description, only four (4) composite tows 14 are being supplied to and controlled by the feed control system 90. In this embodiment. the cutting means comprises an arrangement of upper and lower shearing mechanisms 100a, 100b, the pay-out means includes an arrangement of upper and lower roller drive mechanisms 102a. 102b and the controller 92 is a conventional microprocessor-based CNC controller. More specifically, each of the upper and lower shearing mechanisms 100a, 100b includes a cutting blade 106 aligned with each composite tow 14, a linear actuator 108 movable between extended and retracted positions, and a linkage arrangement 110 for conveying the motion of the actuator 108 to the cutting blade 106. In the preferred embodiment, each cutting blade 106 includes a clamping block 114 which captures the composite tow 14 against an anvil (not shown) subsequent to cutting the tow 14. Additionally, the preferred embodiment of the feed control system 90 includes independently actuated cutting blades 106 for each composite tow 14. though it will be appreciated that the cutting blades 106 may be ganged to reduce the number of individual actuators 108.

Each of the roller drive mechanisms 102a, 102b includes a continuously driven roller 120, an linear actuator 122 movable from extended to retracted positions, and a pinch roller 124 responsive to movement of the actuator 122 to effect engagement of the composite tow 14 with the roller 120. During normal operation of the fiber placement head, the roller drive mechanisms 102a. 102b are disengaged from the composite tows 14 insofar as the movement of the fiber placement head is sufficient to draw the composite tows 14 through the feed control system 90. Following a cutting sequence. the roller drive mechanisms 102a, 102b are caused to engage, advance and "rethread" the composite tows 14. In the context used herein, "rethread" means that the composite tows 14 are directed to a chute 128 (see Fig. 2) which positions the cut end of the composite tow 14 beneath the compaction roller 80 for pay-out on the mold surface 16.

In Figs. 4, 5a and 5b, the controller 92 issues various command signals 130, 132, 134, 136 to the linear actuators 108, 122 for providing a particular pay-out pattern. For example, the controller 92 may begin a sequence by issuing command signals along lines 130 and 132 to all of the pay-out actuators 122, to produce a pattern of contiguous, juxtaposed composite tows 14 as shown in Fig. 5a. As shown the composite tows 14a from the upper idler roller are interleaved, side-by-side, with the composite tows 14b from the lower idler roller upon delivery to the compaction roller 80. Having completed a single pass of the fiber placement head, the controller 92 may issue command signals along lines 134 and 136 to all of the shearing actuators 108 to cut and clamp all of the composite tows 14. Furthermore, assuming that the next pass requires fewer than a full or contiguous pattern of composite tows 14, the controller 128 may issue command signals along lines 130 to the pay-out actuators 122 associated with the upper roller drive mechanisms 102a to produce a pattern of spaced-apart composite tows 14a as seen in Fig. 5b. Similarly, it may be desirable for the controller 128 to issue command signals along lines 136 to cut the composite tows 14b at a predetermined point in the travel of the fiber placement head. Consequently, a spaced-apart pattern is produced as the fiber placement head continues past this point. As mentioned earlier, such spaced-apart pattern is useful to reduce the aerial density of laid fibers in a particular region for optimizing material utilization. Typical applications may include: building the final layer of a composite lay-up so as to place a precise amount of fiberous reinforcement, and/or structural reinforcement in particular regions where full coverage is not essential, e.g., surrounding apertures formed in the composite article.

The control algorithms for generating the command signals 130, 132, 134, and 136 are well within the skill of the art as evinced by Brockman et al. U.S. Patent 5,223,072, the disclosure of which is incorporated herein by reference. Suffice it to say that controller 128 may be programmed in a variety of ways to operate the shearing and roller drive mechanisms 100a, 100b, 102a, 102b to produce the desired patterns including the spaced-apart pattern of composite tows 14.

Although the invention has been shown and described with respect to exemplary embodiments thereof. it should be understood by those skilled in the art that other changes, omissions and additions may be made therein and thereto. without departing from the spirit and scope of the present invention. For example. while the feed control system 90 has been described in the context of a fiber placement machine 10 having multiple degrees of freedom, the feed control system 90 may be employed in any fiber placement device capable of laying a plurality of composite tows. Furthermore, while the feed control system 90 is described in the context of a fiber placement machine 10 which supplies sixteen (16) composite tows 14, it will be appreciated that the feed control system 90 may control the delivery of a greater or smaller number of composite tows 14. For example, to more accurately control the aerial density being laid, it may be desirable to supply and control a greater number of composite tows, each having a smaller width and/or thickness. As such, the versatility and accuracy of the feed control system 90 may be enhanced. Finally, while the exemplary embodiment of the feed control system 90 depicts linearly-actuated cutting and pay-out means 92, 94, any suitable means for cutting and delivering tows to generate a spaced-apart pattern of composite tows may be used.

## Claims

1. A feed control system (90) for use in a fiber placement machine (10) operative to lay a plurality of preimpregnated composite tows (14) over a surface (16), the fiber placement machine (10) including a compaction device (80) for pressing the composite tows (14) against the surface (16), the feed control system (90) including:
cutting means (92), responsive to command signals (134, 136), for selectively cutting composite tows (14);
pay-out means (94), responsive to command signals (130, 132), for selectively delivering composite tows (14) to the compaction device (80);
the feed control system (90) being **characterized by**:
a controller (96) for issuing command signals (130, 132) to the pay-out means (94) for delivering a spaced-apart pattern of composite tows (14) to the compaction device (80) and/or
for issuing command signals (134, 136) to the cutting means (92) for selectively cutting the composite tows (14) such that a spaced-apart pattern of composite tows (14) is fed to the compaction device (80).

2. The feed control system (90) according to claim 1 wherein the controller (96) issues command signals (130, 132) to the pay-out means (94) for feeding alternating composite tows (14) to produce the spaced-apart pattern.

3. The feed control system (90) according to claim 1 or 2 wherein the spaced-apart pattern effects a spacing between composite tows (14) equal to the width of a single composite tow (14).

4. The feed control system (90) according to any of claims 1 to 3 wherein the controller (96) issues command signals (134, 136) to the cutting means (92) to cut alternating composite tows (14) to produce the spaced-apart pattern.

5. The feed control system (90) according to claim 4 wherein the controller issues command signals (134, 136) to the cutting means (92) at a predetermined point in the travel of the fiber placement machine (10) to produce the spaced-apart pattern.

6. A fiber placement machine (10) operative to lay a plurality of preimpregnated composite tows (14) over a surface (16), the fiber placement machine (10) including a compaction device (80) for pressing the composite tows (14) against the surface (16), and a feed control system (90) for delivering the composite tows (14) to the compaction device (80), the fiber placement machine (10) being **characterized by**:
said feed control system (90) being operative to deliver a spaced-apart pattern of composite tows (14) to the compaction device (80).

7. The fiber placement machine (10) according to claim 6 wherein said feed control system (90) includes:
cutting means (92), responsive to command signals (134, 136), for selectively cutting composite tows (14);
pay-out means (94), responsive to command signals (130, 132), for selectively delivering composite tows (14) to the compaction device (80);
and wherein the feed control system (90) is further **characterized by**:
a controller (96) for issuing command signals (130, 132) to the pay-out means (94) for delivering a spaced-apart pattern of composite tows (14) to the compaction device (80).

8. The fiber placement machine (10) according to claim 6 or 7 wherein said feed control system (90) includes:
cutting means (92), responsive to command signals (134, 136), for selectively cutting composite tows (14),
pay-out means (94), responsive to command signals (130, 132), for selectively delivering composite tows to the compaction device (80);
the feed control system (90) being **characterized by**:
a controller (96) for issuing command signals (134, 136) to the cutting means (92) for selectively cutting the composite tows (14) such that a spaced-apart pattern of composite tows (14) is fed to the compaction device (80).

9. The fiber placement machine (10) according to claim 7 or 8 wherein the controller (96) issues command signals (130, 132) to the pay-out means (94) for feeding alternating composite tows (14) to produce the spaced-apart pattern.

10. The fiber placement machine (10) according to any of claims 6 to 9 wherein the spaced-apart pattern effects a spacing between composite tows (14) equal to the width of a single composite tow (14).

11. The fiber placement machine (10) according to any of claims 8 to 10 wherein the controller (96) issues command signals (134, 136) to the cutting means (92) to cut alternating composite tows (14) to produce the spaced-apart pattern.

12. The fiber placement machine (10) according to claim 11 wherein the controller issues command signals (134, 136) to the cutting means (92) at a predetermined point in the travel of the fiber placement machine (10) to produce the spaced-apart pattern.

## Patentansprüche

1. Zuführkontrollsystem (90) zur Verwendung in einer Faser-Platziermaschine (10), die arbeitsfähig ist, eine Mehrzahl von vorimprägnierten Verbundmaterial-Faserstränge (14) auf einer Oberfläche (16) abzulegen, wobei die Faser-Platziermaschine (10) eine Kompaktiervorrichtung (80) zum Pressen der Verbundmaterial-Faserstränge (14) gegen die Oberfläche (16) aufweist, wobei das Zuführkontrollsystem (90) aufweist:
eine Schneideinrichtung (92), die auf Kommandosignale (134, 136) anspricht, um Verbundmaterial-Faserstränge (14) selektiv zu schneiden;
eine Ausgabeeinrichtung (94), die auf Kommandosignale (130, 132) anspricht, um Verbundmaterial-Faserstränge (14) an die Kompaktiervorrichtung (80) selektiv abzugeben;
wobei das Zuführkontrollsystem (90) **gekennzeichnet ist durch**:
eine Kontrolleinrichtung (96) zum Ausgeben von Kommandosignalen (130, 132) an die Ausgabeeinrichtung (94), um ein Abstands-Muster von Verbundmaterial-Fasersträngen (14) an die Kompaktiervorrichtung (80) abzugeben und/oder
zum Ausgeben von Kommandosignalen (134, 136) an die Schneideinrichtung (92), um die Verbundmaterial-Faserstränge (14) selektiv zu schneiden, so dass ein Abstands-Muster von Verbundmaterial-Fasersträngen (14) der Kompaktiervorrichtung (80) zugeführt wird.

2. Zuführkontrollsystem (90) nach Anspruch 1, wobei die Kontrolleinrichtung (96) Kommandosignale (130, 132) an die Abgabeeinrichtung (94) ausgibt, um alternierende Verbundmaterial-Faserstränge (14) zuzuführen, um das Abstands-Muster zu erzeugen.

3. Zuführkontrollsystem (90) nach Anspruch 1 oder 2, wobei das Abstands-Muster einen Abstand zwischen den Verbundmaterial-Fasersträngen (14) bewirkt, der der Breite eines einzelnen Verbundmaterial-Faserstrangs (14) entspricht.

4. Zuführkontrollsystem (90) nach einem der Ansprüche 1 bis 3, wobei die Kontrolleinrichtung (96) Kommandosignale (134, 136) an die Schneideinrichtung (92) ausgibt, um alternierende Verbundmaterial-Faserstränge (14) zu schneiden, um ein Abstands-Muster zu erzeugen.

5. Zuführkontrollsystem (90) nach Anspruch **4,** wobei die Kontrolleinrichtung Kommandosignale (134, 136) an die Schneideinrichtung (92) an einer vorbestimmten Stelle innerhalb des Verfahrbereichs der Faser-Platziermaschine ausgibt, um ein Abstands-Muster zu erzeugen.

6. Faser-Platziermaschine (10), die arbeitsfähig ist, um eine Mehrzahl von vorimprägnierten Verbundmaterial-Fasersträngen (14) auf eine Oberfläche (16) zu legen, wobei die Faser-Platziermaschine (10) eine Kompaktiervorrichtung (80) zum Pressen der Verbundmaterial-Faserstränge (14) gegen die Oberfläche (16) und ein Zuführkontrollsystem (90) zum Abgeben der Verbundmaterial-Faserstränge (14) an die Kompaktiervorrichtung (80) aufweist, wobei die Faser-Platziermaschine (10) **dadurch gekennzeichnet ist,**
**dass** das Zuführkontrollsystem (90) arbeitsfähig ist, ein Abstands-Muster von Verbundmaterial-Fasersträngen (14) an die Kompaktiervorrichtung (80) abzugeben.

7. Faser-Platziermaschine (10) nach Anspruch 6, wobei das Zuführkontroll-System (90) aufweist:
eine Schneideinrichtung (92), die auf Kommandosignale (134, 136) anspricht, um Verbundmaterial-Faserstränge (14) selektiv zu schneiden;
eine Ausgabeeinrichtung (94), die auf Kommandosignale (130, 132) anspricht, um Verbundmaterial-Faserstränge (14) an die Kompaktiervorrichtung (80) selektiv abzugeben;
und wobei das Zuführkontrollsystem (90) weiterhin **gekennzeichnet ist durch**:
eine Kontrolleinrichtung (96) zum Ausgeben von Kommandosignalen (130, 132) an die Ausgabeeinrichtung (94), um ein Abstands-Muster von Verbundmaterial-Fasersträngen (14) an die Kompaktiervorrichtung (80) abzugeben.

8. Faser-Platziermaschine (10) nach Anspruch 6 oder 7, wobei das Zuführkontrollsystem (90) aufweist:
eine Schneideinrichtung (92), die auf Kommandosignale (134, 136) anspricht, um die Verbundmaterial-Faserstränge (14) selektiv zu schneiden,
eine Ausgabeeinrichtung (94), die auf Kommandosignale (130, 132) anspricht, um Verbundmaterial-Faserstränge (14) an die Kompaktiervorrichtung (80) selektiv abzugeben;
und wobei das Zuführkontrollsystem (90) **gekennzeichnet ist durch**:
eine Kontrolleinrichtung (96) zum Ausgeben von Kommandosignalen (134, 136) an die Schneideinrichtung (92) zum selektiven Schneiden der Verbundmaterial-Faserstränge (14), so dass ein Abstands-Muster von Verbundmaterial-Fasersträngen (14) an die Kompaktiervorrichtung (80) zugeführt wird.

9. Faser-Platziermaschine (10) nach Anspruch 7 oder 8, wobei die Kontrolleinrichtung (96) Kommandosignale (130, 132) an die Ausgabeeinrichtung (94) ausgibt, um alternierende Verbundmaterial-Faserstränge (14) zuzuführen, um das Abstands-Muster zu erzeugen.

10. Faser-Platziermaschine (10) nach einem der Ansprüche 6 bis 9, wobei das Abstands-Muster einen Abstand zwischen den Verbundmaterial-Fasersträngen (14) bewirkt, der der Breite eines einzelnen Verbundmaterial-Faserstrangs (14) entspricht.

11. Faser-Platziermaschine (10) nach einem der Ansprüche 8 bis 10, wobei die Kontrolleinrichtung (96) Kommandosignale (134, 136) an die Schneideinrichtung (92) ausgibt, um alternierende Verbundmaterial-Faserstränge (14) zu schneiden, um das Abstands-Muster zu erzeugen.

12. Faser-Platziermaschine (10) nach Anspruch 11, wobei die Kontrolleinrichtung Kommandosignale (134, 136) an die Schneideinrichtung (92) an einer vorbestimmten Stelle innerhalb des Verfahrbereichs der Faser-Platziermaschine (10) ausgibt, um das Abstands-Muster zu erzeugen.

## Revendications

1. Système de commande d'alimentation (90) destiné à être utilisé pour une machine de placement de fibres (10) opérationnelle pour poser une pluralité de câbles composites préimprégnés (14) sur une surface (16), la machine de placement de fibres (10) comprenant un dispositif de compactage (80) pour presser les câbles composites (14) contre la surface (16), le système de commande d'alimentation (90) comprenant :
des moyens de découpage (92), répondant à des signaux de commande (134, 136) pour couper de manière sélective des câbles composites (14) ;
des moyens de filage (94) répondant à des signaux de commande (130, 132) pour fournir de manière sélective des câbles composites (14) au dispositif de compactage (80) ;
le système de commande d'alimentation (90) étant **caractérisé en ce qu'**il comprend :
un dispositif de commande (96) destiné à émettre des signaux de commande (130, 132) aux moyens de filage (94) pour délivrer un motif d'espacement des câbles composites (14) au dispositif de compactage (80) et/ou destiné à émettre des signaux de commande (134, 136) aux moyens de découpage (92) pour couper de manière sélective les câbles composites (14) de façon à ce qu'un motif d'espacement des câbles composites (14) soit fourni au dispositif de compactage (80).

2. Système de commande d'alimentation (90) selon la revendication 1, dans lequel le dispositif de commande (96) émet des signaux de commande (130, 132) aux moyens de filage (94) pour fournir de manière alternative des câbles composites (14) de façon à produire le motif d'espacement.

3. Système de commande d'alimentation (90) selon la revendication 1 ou la revendication 2, dans lequel le motif d'espacement réalise un espacement entre les câbles composites (14) égal à la largeur d'un seul câble composite (14).

4. Système de commande d'alimentation (90) selon l'une quelconque des revendications 1 à 3, dans lequel le dispositif de commande (96) émet des signaux de commande (134, 136) aux moyens de découpage (92) pour couper de manière alternative des câbles composites (14) de façon à produire le motif d'espacement.

5. Système de commande d'alimentation (90) selon la revendication 4, dans lequel le dispositif de commande émet des signaux de commande (134, 136) aux moyens de découpage (92) en un point prédéterminé du trajet de la machine de placement de fibres (10) de façon à produire le motif d'espacement.

6. Machine de placement de fibres (10) opérationnelle pour poser une pluralité de câbles composites préimprégnés (14) sur une surface (16), la machine de placement de fibres (10) comprenant un dispositif de compactage (80) pour presser les câbles composites (14) contre la surface (16), et un système de commande d'alimentation (90) pour fournir les câbles composites (14) au dispositif de compactage (80), la machine de placement de fibres (10) étant **caractérisée en ce que** :
ledit système de commande d'alimentation (90) est opérationnel pour délivrer un motif d'espacement des câbles composites (14) au dispositif de compactage (80).

7. Machine de placement de fibres (10) selon la revendication 6, dans laquelle ledit système de commande d'alimentation (90) comprend :
des moyens de découpage (92), répondant à des signaux de commande (134, 136) pour couper de manière sélective des câbles composites (14) ;
des moyens de filage (94) répondant à des signaux de commande (130, 132) pour fournir de manière sélective des câbles composites (14) au dispositif de compactage (80) ;
et dans laquelle le système de commande d'alimentation (90) est en outre **caractérisé en ce qu'**il comprend :
un dispositif de commande (96) destiné à émettre des signaux de commande (130, 132) aux moyens de filage (94) pour délivrer un motif d'espacement des câbles composites (14) au dispositif de compactage (80).

8. Machine de placement de fibres (10) selon la revendication 6 ou la revendication 7, dans laquelle ledit système de commande d'alimentation (90) comprend :
des moyens de découpage (92), répondant à des signaux de commande (134, 136) pour couper de manière sélective des câbles composites (14) ;
des moyens de filage (94) répondant à des signaux de commande (130, 132) pour fournir de manière sélective des câbles composites au dispositif de compactage (80) ;
le système de commande d'alimentation (90) étant **caractérisé en ce qu'**il comprend :
un dispositif de commande (96) destiné à émettre des signaux de commande (134, 136) aux moyens de découpage (92) pour couper de manière sélective les câbles composites (14) de façon à ce qu'un motif d'espacement des câbles composites (14) soit fourni au dispositif de compactage (80).

9. Machine de placement de fibres (10) selon la revendication 7 ou la revendication 8, dans laquelle le dispositif de commande (96) émet des signaux de commande (130, 132) aux moyens de filage (94) pour fournir de manière alternative des câbles composites (14) de façon à produire le motif d'espacement.

10. Machine de placement de fibres (10) selon l'une quelconque des revendications 6 à 9, dans laquelle le motif d'espacement réalise un espacement entre les câbles composites (14) égal à une largeur d'un seul câble composite (14).

11. Machine de placement de fibres (10) selon l'une quelconque des revendications 8 à 10, dans laquelle le dispositif de commande (96) émet des signaux de commande (134, 136) aux moyens de découpage (92) pour couper de manière alternative les câbles composites (14) de façon produire le motif d'espacement.

12. Machine de placement de fibres (10) selon la revendication 11, dans laquelle le dispositif de commande émet des signaux de commande (134, 136) aux moyens de découpage (92) en un point prédéterminé du trajet de la machine de placement de fibres (10) de façon à produire le motif d'espacement.
